Europäisches Patentamt

European Patent Office

Office européen des brevets

(19)

(11) Publication number: **0 085 249**
**B1**

# EUROPEAN PATENT SPECIFICATION

(45) Date of publication of patent specification: **21.05.86**

(21) Application number: **82306817.6**

(22) Date of filing: **20.12.82**

(51) Int. Cl.⁴: **H 02 J 5/00,** H 02 M 7/797

(54) **Method and apparatus for electrical power conversion.**

(30) Priority: **21.12.81 US 333070**

(43) Date of publication of application:
**10.08.83 Bulletin 83/32**

(45) Publication of the grant of the patent:
**21.05.86 Bulletin 86/21**

(84) Designated Contracting States:
**AT BE CH DE FR GB IT LI LU NL SE**

(56) References cited:
**FR-A-2 303 405**
**US-A-4 020 361**
**US-A-4 178 629**

(73) Proprietor: **HELIONETICS, INC.**
**17312 Eastman Street**
**Irvine California (US)**

(72) Inventor: **Suelzle, Larry R.**
**10121 Theseus Drive**
**Huntington Beach California (US)**

(74) Representative: **Baillie, Iain Cameron et al**
**c/o Ladas & Parry Isartorplatz 5**
**D-8000 München 2 (DE)**

Courier Press, Leamington Spa, England.

## Description

### Background of the invention

This invention relates generally to electrical power conversion and, more particularly, to new and improved electrical power conversion systems for use with alternative energy sources and which may be utilized to interconnect the alternative energy source with an a.c. power grid, such as the electrical power grid of an electric public utility or a local diesel generator system, so that the alternative energy source more effectively supplements the power grid.

The electrical output from most alternative energy sources, such as photovoltaic arrays (solar cells), fuel cells, windmills, Stirling engines and other such sources, is not ideal. That is, the output energy provided by such sources is unregulated in voltage, and in the case of an alternating current (a.c.) output, the frequency is also unregulated. For most applications of alternative energy sources, some form of a power conversion, typically in the form of a conveniently packaged power conversion unit, is necessary to provide output power of the desired type (a.c. or d.c.) and quality.

When a power conversion unit is to be used not only to convert the power to the appropriate type and quality, but also to interconnect the alternative energy source with an a.c. power grid, special problems are often encountered. The output power from the conversion unit must be high quality a.c., that is, have low harmonic current distortion and near-unity output power factor. The conversion unit must operate stably in multi-unit deployment (i.e. with many units connected to the same power grid) without "cross-talk", which could result in system oscillation. The conversion unit must be able to operate automatically with such non-ideal alternative energy sources, as photovoltaic (solar cell) arrays.

In the prior art, two types of power converters have generally been used to operate between a direct current (d.c.) alternative energy source and an electric utility power grid. Line-commutated power conversion units use the utility voltage to control switching operations (in particular, the turn-off of the conduction states of switching devices such as thyristors used in the units). Self-commutated power conversion units, on the other hand, provide internal circuits for both the turn-on and turn-off of switching devices. The line-commutated power conversion units, while simpler in general than self-commutated power units, generally have very poor quality current waveforms and power factors. Additionally, line-commutated converters usually require large output filters to enhance the quality of the output current waveform. Such large output filters, besides adding cost to line-commutated power converter units, also increase the likelihood of electrical power grid oscillations occurring at certain frequencies.

Self-commutated power conversion units generally have a better output waveform than line-commutated power converter units. Typically, such self-commutated converters use a phase-locked loop which synchronizes the units to the power grid, and therefore, are not capable of a fast response to perturbations on the power grid. Some units employ large output filters which are typically resonant with the grid at some frequencies.

Both the line-commutated and the self-commutated power conversion systems tend to degrade the quality of the power on the electrical power grid by generating harmonics of the nominal operating frequency and generating other electrical noise. The line-commutated power converters further tend to degrade the quality of the grid by drawing reactive power from the grid. It may, in fact, be desirable for such power converters to supply reactive power to the grid to compensate for reactive loads on the grid. Electrical noise and harmonics are also undesirable on the power grid because, among other things, they can interfere with radio and television reception.

Hence, those concerned with the development and use of electrical power conversion systems have long recognized the need for improved methods and apparatus for not only efficiently converting power from an alternative energy source to high-quality a.c. power utilizable by a power grid, but also for absorbing power from the utility at frequencies above or below the nominal operating frequency of the utility and converting such wasted power into useful power at the nominal frequency of the utility. The present invention clearly fulfills these needs.

U.S. Patent No. 4,020,316 teaches a switching-mode amplifier which may be used to convert DC power at it's input to a.c. power at it's output. The amplifier may be controlled to handle relatively large dynamic ranges such as might be necessary when the output voltage corresponds to a music or voice signal.

U.S. Patent No. 4,178,629 is concerned with an uninterruptable power supply of the type which may be used in computer installations. The power supply includes a d.c. to a.c. converter having wave shape control for decreasing distortion when powering reactive loads.

### Summary of the invention

The present invention provides a power conversion system for absorbing electrical power from a first power source and converting it to electrical power at the nominal or primary operating frequency of a second power source, and is characterized by circuits which absorb power from the second source at frequencies differing substantially from the nominal frequency and convert that additional power to power at the nominal frequency.

In another aspect, the invention provides a method of electrical power conversion characterized by the steps of absorbing electrical power from an AC source of frequencies other than the nominal operating frequency of the source and converting the absorbed electrical power to additional electrical power at the nominal frequency of the AC source.

Brief description of the drawings

Fig. 1 is a block diagram of an overall system, showing a power conversion unit in use in accordance with the invention;

Figs. 2(a) and 2(b) are vector diagrams depicting the conversion unit and power grid phase relationships at frequencies around the nominal frequency of the grid and at frequencies significantly different from the nominal frequency of the grid, respectively;

Fig. 3 is a combined block diagram and electrical schematic illustrating how an alternative energy source, such as a solar array, may be connected to the power grid via the power conversion unit;

Fig. 4 is a block diagram of a presently preferred embodiment of a power conversion system according to the present invention;

Fig. 5 is a block diagram of a presently preferred embodiment of the feedback network used in the power converter; and

Fig. 6 is a more detailed block diagram and electrical schematic of a power conversion system, in accordance with the invention.

Description of the preferred embodiment

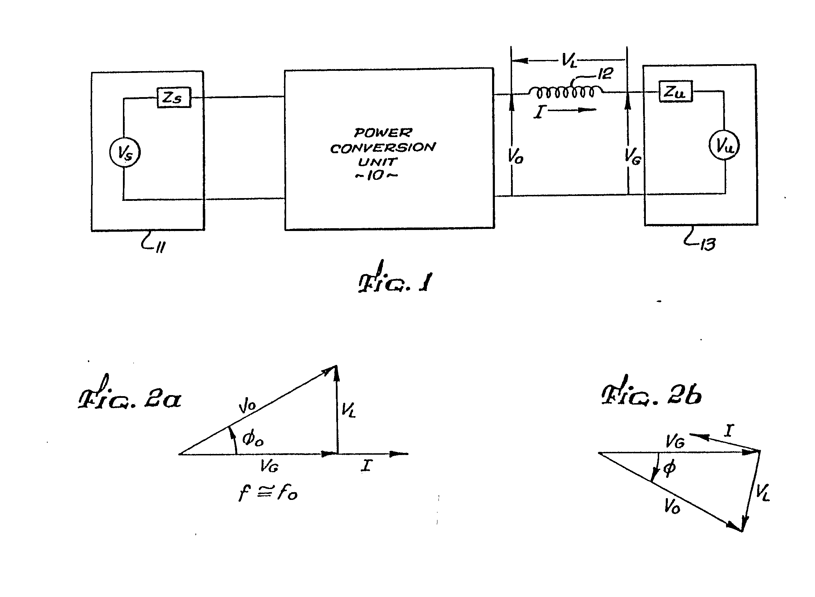

Referring now to the drawings, and particularly to Fig. 1 thereof, a power conversion unit 10 of the type described herein is shown coupling an alternative energy source, such as a d.c. source 11 to power grid 13. The power conversion unit 10 is shown connected to the power grid 13 via an inductor 12, Normally, the inductor 12 is housed with the conversion unit 10 and is considered as a part thereof. However, for purposes of explanation, it is shown separately in Fig. 1 so that the output voltage $V_O$ depicted in Fig. 1 may be appropriately defined.

The d.c. source 11 may conceptually be considered as a d.c. potential source $V_S$ in series with a source impedance $Z_S$, where $V_S$ may consist of an a.c. power source and appropriate rectifiers and filters to produce a d.c. voltage for input to the power conversion unit 10. The power grid 13 may be conceptually considered as an a.c. potential source $V_U$ in series with a source impedance $Z_U$. The grid voltage $V_G$ sensed by the conversion unit 10 depends not only on the voltage $V_U$, but also on the impedance $Z_U$.

The alternative energy source 11 may be an array of photovoltaic cells (solar cells), a windmill and d.c. generator combination, a Stirling generator or any other appropriate source. In typical operation of the power conversion unit 10, electrical power is extracted from the d.c. source 11 and injected into the power grid 13 by generation of a current I in proper phase relation to the a.c. grid voltage $V_G$, at the nominal operation frequency $f_o$ of the grid. Those skilled in the art will recognize, of course, that the nominal frequency $f_o$ of most domestic electric utilities is either 50 or 60 Hz. In certain specialized applications, electric power systems having other nominal frequencies are also known. The power conversion method and apparatus of the present invention may be designed to work at any nominal frequency.

The voltage of the grid, $V_G$, is composed of the desirable nominal frequency $f_o$ and also includes undesirable harmonics of the nominal frequency, grid noise and transients. The conversion unit 10 of the present invention will not only convert the voltage $V_S$ from the d.c. source 11 to an a.c. output voltage $V_O$ at the nominal frequency of the utility, but also will absorb power from the grid 13 at harmonics of the nominal frequency and at noise frequencies, convert the absorbed power to the nominal frequency $f_o$ and return it to the grid as useful power. Thus, the conversion unit 10 is capable of not only providing power to the grid 13 from the source 11, but can also improve the quality of power available from the grid, itself, by converting useless energy to useful form.

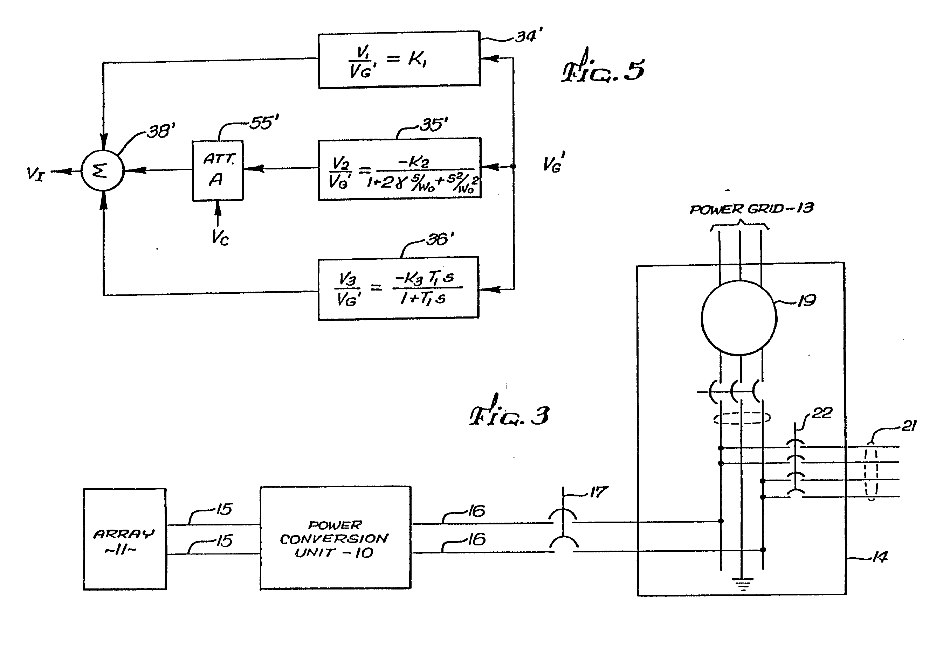

The conversion unit 10 outputs an a.c. voltage $V_O$ at the nominal frequency $f_o$. For a positive flow of electrical power form the power conversion unit 10 to the electric utility grid 13 at the nominal frequency $f_o$, the conversion unit provides the necessary phase shift and attenuation characteristics to provide the voltage vector relationships shown in Fig. 2(a) of the drawings. in this regard, $\overline{V}_O$ must lead $\overline{V}_G$ in phase. The phase angle between $\overline{V}_O$ and $\overline{V}_G$ is $\phi_o$ and is diagrammatically defined in Fig. 2(a). A voltage $\overline{V}_L$, the voltage across the inductor 12, is also diagrammatically defined as being equal to $\overline{V}_O$ minus $\overline{V}_G$ (those skilled in the art will recognize that the bar above these symbols indicated that they are being treated as vector quantities, consistent with their depiction in Fig. 2(a)).

Generally, it is desirable that the current I be injected into the grid 13 in phase with $\overline{V}_G$. For this to occur, the output voltage $\overline{V}_O$ from the conversion unit 10 must have an appropriate amplitude and phase characteristic such that $\overline{V}_L$ leads $\overline{V}_G$ by 90°. The power flow P into the grid 13 is generally defined as follows:

$$P = \frac{|\overline{V}_L| \; |\overline{V}_G| \; \cos(\varphi_o)}{2\pi f_o L} \qquad (1)$$

For a unity power factor, that is the case where $\overline{V}_L$ leads $\overline{V}_G$ by 90°, equation (1) becomes:

$$P \text{ (unity)} = \frac{|\overline{V}_L| \; |\overline{V}_G|}{2\pi f_o L} \qquad (2)$$

When $\overline{V}_L$ does not lead $\overline{V}_G$ by exactly 90°, the power from the power conversion unit 10 to the power grid 13 will have both real and reactive components at the nominal frequency $f_o$. This is not necessarily undesirable, since, as is well known, reactive loads experienced by most power grids are inductive and appropriate selection of the reactive components of the power flow P can be used to make the power conversion unit 10 appear as a capacitive load and thereby improve the overall power factor of the load on the grid. Thus, the power conversion system of the present invention may be used to improve the power factor of the load seen by the grid, if desired, by appropriately selecting the phase of $\overline{V}_L$ relative to $\overline{V}_G$. The manner in which the latter is accomplished will be subsequently described.

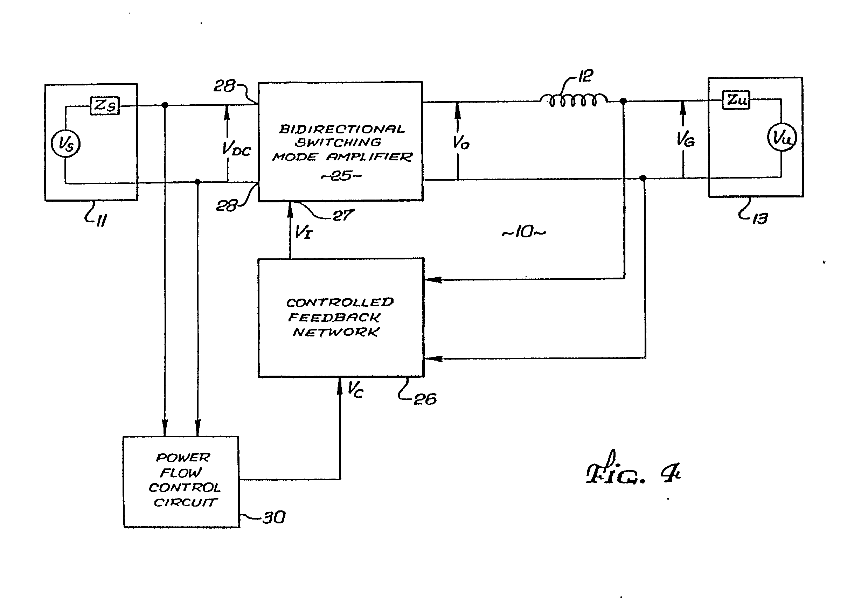

Turning now more particularly to Fig. 3 of the drawings, it is anticipated that the power conversion unit 10 of the present invention will find particular use for interconnecting an array of solar cells 11, possibly disposed on the roof of a user's residence, to the local power grid 13 via a distribution panel 14 at the user's residence. Of course, the power conversion unit 10 may be used in non-residential applications as well, such as office buildings and factories, and, as previously indicated may be powered from sources 11 other than solar cells.

Fig. 3 schematically depicts how the solar array 11 in the power conversion unit 10 may be interconnected to the power grid 13 via the distribution panel 14. The photovoltaic or solar cell array provides direct current to the power conversion unit 10 over lines 15. The electrical output of the conversion unit 10 is preferably coupled at the distribution panel 14 via electric lines 16 and circuit breaker 17 to the 240 volt a.c. mains 20 typically found in conventional distribution panels. These electrical mains are connected to the grid 13 via circuit breakers 18 and a kilowatt hour meter 19, both of which are typically located in or adjacent the panel 14. Also connected to the mains 20 are a plurality of separate circuits 21 for using electrical energy at the user's residence. These circuits are usually interconnected to mains 20 via individual circuit breakers 22.

Of course, if no array 11 nor power conversion unit 10 are provided, electrical energy is merely drawn off the power grid 13 by the circuits 21 and the amount of power used is reported by the kilowatt hour meter 19. However, when an array 11 and power conversion unit 10 are used, they can provide electrical energy to the circuits 21, and, in the event the array 11 and power conversion unit 10 have more energy available than is needed at any given time by the circuits 21, they can pump electrical energy back through the meter 19 to the power grid 13 for use by other customers of the grid. The meter 19 in this case increments as energy is consumed by the user from the power grid 13 (i.e. circuits 21 are consuming more energy than the array 11 and power conversion unit 10 are supplying) and decrements as energy is pumped into the grid 13 by the user (i.e. circuits 21 are consuming less energy than the array 11 and power conversion unit 10 are generating).

It will be apparent to those skilled in the art that, if a conventional meter 19 is used, the user is credited for the generation of power at the same rate as the user is charged for the consumption of electric power. That is, if the user is charged $0.10 for each kilowatt hour used, he or she is also automatically credited $0.10 for each kilowatt hour generated. It may well be however, that the utility will be required by rate fixing authorities to charge for electric consumption at one rate and credit for electric power generation at another rate. In this event, special metering techniques will be required to correctly record the charges and credits. Such metering techniques are outside the scope of the present invention, and, accordingly, are not described here.

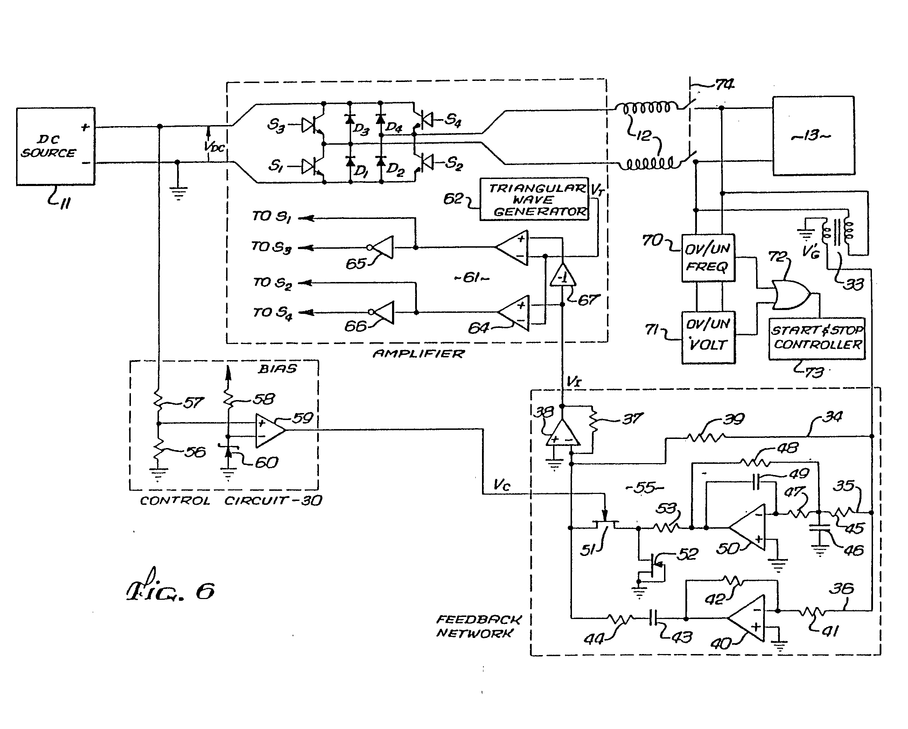

Referring now to Fig. 4 of the drawings, there is shown a block diagram of a power conversion unit 10 constructed in accordance with the present invention. As was depicted in Fig. 1, the power conversion system interconnects a d.c. source 11 with the electric utility grid 13. A power flow control circuit 30 is also shown whose construction and function will be subsequently described. The power flow control circuit 30 is preferably included as part of the power conversion unit 10 and housed therewith.

The power conversion unit 10 comprises a bidirectional switching mode amplifier 25, a coupling inductor 12 and a controlled feedback network 26. The amplifier 25 generates an output voltage $V_O$ in response to an input signal $V_I$ at terminal 27, the signal $V_I$ being generated by the controlled feedback network 26.

Amplifier 25 is preferably a Class D, bidirectional switching mode amplifier of the type disclosed in U.S. Patent No. 4,020,361, which is hereby incorporated by reference. In accordance with the invention, the amplifier 25 is controlled to have negative output resistance at the nominal frequency $f_o$ and positive output resistance at frequencies substantially different from the nominal frequency.

The feedback network 26 is responsive to the voltage $V_G$ presented by the power grid and also to a signal $V_c$ from the power flow control circuit 30. Signal $V_c$ determines the power flow to the grid 13.

Input signal $V_I$ to the conversion unit 10 is generated by transforming the voltage $V_G$ in feedback network 26. Feedback network 26 has a transfer function, which will be subsequently described, and which is controlled, in part by the control voltage $V_c$.

Referring again to Fig. 2(a), it will be recalled that $\overline{V}_O$ is required to have certain amplitude and phase characteristics relative to $\overline{V}_G$ at the nominal frequency $f_o$ of the grid 13 in order for current I to be injected into the grid at a desirable phase relationship to $\overline{V}_G$. With the relationship shown in Fig. 2(a), d.c. power is taken from the array 11 and converted to a.c. power, the generated a.c. current I being in phase with $\overline{V}_G$. In some applications it may be desirable for the current I to be somewhat out of phase with $\overline{V}_G$ in order to improve the overall load power factor seen by the grid 13. For simplicity's sake, however, the current I is shown in phase with $\overline{V}_G$ in Fig. 2(a).

At grid frequencies significantly different from

the nominal frequency $f_o$, e.g. at frequencies equal to or greater than $2f_0$, where undesirable grid harmonics and noise are found, the relationship between $\overline{V}_G$ and $\overline{V}_O$ is preferentially as depicted in Fig. 2(b) so that, at these frequencies, the bidirectional amplifier 25 absorbs power from the grid 13. Because of the bidirectional nature of the switching mode amplifier 25, the latter a.c. power from the grid will be converted to d.c. power at the d.c. input 28 of the amplifier where it will be available to be reconverted into useful power at the nominal frequency $f_o$ and can be returned to the grid 13.

The transfer function of the feedback circuit 26 is selected such that $\overline{V}_O$ and $\overline{V}_G$ have the relationship depicted in Fig. 2(a) for frequencies near the nominal frequency $f_o$ and the relationship depicted in Fig. 2(b) for frequencies significantly different from nominal frequency $f_o$, e.g. at frequencies equal to or greater than twice the nominal frequency $f_o$. Of course, if it is desired that the conversion unit 10 have a capacitive component to its output impedance, then Fig. 2(a) will change to show I lagging $\overline{V}_G$ somewhat, and the transfer function of feedback network 26 will likewise change. The transfer function of the feedback control network 26 depicted in Fig. 5 (expressed in Laplace transforms) will generate a control signal $V_I$ which, when amplified by the amplifer 25 (Fig. 4), will provide a voltage $\overline{V}_O$ having the desired relationship to $\overline{V}_G$ at $f_o$ (as shown in Fig. 2(a)) and at frequencies equal to or greater than $2f_o$ (as shown in Fig. 2(b)).

Fig. 6 shows a detailed logic diagram of the power conversion unit 10. The transfer function depicted in Fig. 5 is embodied in the feedback network 26 shown in Fig. 6. The a.c. grid voltage of $V_G$ is input to the network 26 via a transformer 33 which reduces the voltage to a level ($V_G'$) suitable for network 26.

The feedback network 26 consists of three parallel path circuits 34, 35 and 36 which correspond to the transfer functions identified as 34', 35' and 36' in Fig. 5. The electrical outputs of the circuits 34, 35 and 36 are added at operational amplifier 38 in Fig. 6 which corresponds to the summing junction adder 38' in Fig. 5. Those skilled in the art will recognize that resistor 37 determines the overall gain of the operational amplifier 38. The electrical output of the operational amplifier 38 provides the control input $V_I$ for the bidirectional switching mode amplifier 25.

The first feedback path 34 of the network 26, consisting of a resistor 39, provides a signal which is in phase with the power grid voltage $V_G$ at all frequencies. If this were the only feedback path, $V_O$ would exactly track $V_G$ both in frequency and phase and no power transfer would occur between the grid and the switching mode amplifier 25.

The second feedback path 35 includes a two-pole low-pass active filter comprising an operational amplifier 50 and appropriate circuit elements 45—49. Elements 45—49 are selected so that at the nominal frequency $f_o$ the amplitude is boosted significantly and the phase is shifted by 90°.

Feedback path 35 also contains an electronic attenuator circuit 55 which corresponds to attenuator 55' shown in Fig. 5. The attenuator circuit 55 of Fig. 6 includes two field effect transistors 51 and 52 and a resistor 53. The drain to source resistance of the field effect transistor 51 is controlled by control voltage $V_C$, the resistance increasing for increasingly negative values of $V_C$. It will be apparent to those skilled in the art, that feedback path 35, when combined with feedback path 34, adjusts the phase of $\overline{V}_O$ relative to $\overline{V}_G$ so that electrical power transfer from the d.c. source 11 to the grid 13 at the nominal frequency $f_o$ will occur depending on the magnitude of control voltage $V_C$.

Feedback path 36 in Fig. 6 includes an operational amplifier 40 with a feedback resistor 42 and an input resistor 41, all connected in series with a capacitor 43 and a resistor 44 at the output of the amplifier. Feedback path 36 generates a feedback signal component which lags the voltage $\overline{V}_G$ by 90°. This signal component increases in amplitude proportionally with frequency until the frequency approaches:

$$f = \frac{1}{2\pi RC} \qquad (3)$$

where R is the resistance of resistor 44 and C is the capacitance of capacitor 43. The lagging output voltage produced by feedback path 36 causes the bidirectional amplifier 25 to absorb power from the grid 13 at frequencies substantially above the nominal frequency $f_o$.

The power flow at the nominal frequency $f_o$ (i.e. 60 Hz) is controlled in response to control signal $V_C$ to the field effect transistor 51. When the transistor 51 is "off", the 90° lag component contributed by feedback path 36 produces a reverse power flow from the grid 13 through the switching mode amplifier 25 to the d.c. source 11. As the conductance of the transistor 51 increases, the leading 90° component produced by the feedback path 35 at the nominal frequency $f_o$ increases to exceed the component from path 36 and cause power at the nominal frequency to flow from the d.c. source 11 through the amplifier 25 to the grid 13.

Fig. 6 also illustrates an embodiment of the power flow control circuit 30 which is preferably employed for a d.c. source having a substantial source impedance $Z_S$ such as a photovoltaic array. If the d.c. source has such a substantial source resistance, it may be desirable to maintain the voltage $V_{DC}$ at the input to the switching mode amplifier 25 at a substantially constant value. A Zener diode 60, in combination with a series resistor 58, provides a reference voltage to one input of an operational amplifier 59 in the control circuit 30. Resistor 58 is coupled to a convenient voltage supply (bias) appropriately provided in the conversion unit. $V_{DC}$ is applied through a voltage divider, comprising a pair of series resistors 56 and 57, to a second input of the operation amplifier 59. Operational amplifier 59 outputs the control signal $V_C$ to the feedback network 26.

$V_C$ represents the difference between the solar array voltage and the desired solar array voltage. A non-zero value of $V_C$ causes a change in the power flow in such a manner as to reduce the value of $V_C$, i.e. to return the array voltage to the desired voltage. In the instance where the power available from the array at that voltage is insufficient to support electrical losses within the power conversion unit, the power may even be controlled so that power flows in the reverse direction, i.e. from the grid 13 to the power conversion unit 11. This reverse power flow could be sensed and used to initiate a turn-off of the power conversion unit utilizing the Start & Stop Controller 73 which is described below.

The optimum value of $V_{DC}$ is also a function of other parameters affecting the alternative source, such as the temperature of the array. Accordingly, the power flow control circuit 30 may be modified, if desired, to effectively adjust the reference voltage as a function of the temperature of the photovoltaic array, or any other desired parameter.

Turning now to the switching mode amplifier 25, U.S. Patent No. 4,020,361 includes a detailed discussion of the switching mode amplifier and, therefore, it is only briefly described here. As depicted in Fig. 6, switching mode amplifier 25 includes four electronic power switches $S_1$—$S_4$, each of which may consist of several parallel transistors and a drive circuit. Across each electronic power switch $S_1$—$S_4$, is connected a corresponding diode $D_1$—$D_4$, repectively, which permits reactively generated currents to flow against the normal conduction paths through the switches.

The power switches $S_1$—$S_4$ are controlled by a control logic circuit 61 comprising a triangular wave generator 62, comparator amplifiers 63 and 64, logical invertors 65 and 66 and an inverting amplifier 67, all connected as shown in Fig. 6. The control logic circuit 61 is responsive to the output signal $V_I$ from the feedback network 26.

The frequency of the triangular wave $V_T$ produced by the generator 62 is preferably selected to be at least several times the highest frequency to be found in the signal $V_I$. While a frequency of 600 Hz for the triangular wave would likely be a sufficiently high frequency for 50 Hz or 60 Hz systems, it is in the audible range and a power conversion unit 10 so constructed may emit audible noise. To avoid the introduction of such audible noise, it is preferable to select the frequency of $V_T$ to be in the inaudible range, such as 20 KHz to 30 KHz or higher.

In order to protect the power conversion unit 10 against possible abnormal conditions on the grid, it is preferably provided with additional protection devices beyond the circuit breaker 17 shown in Fig. 3. These devices may include circuitry which monitors the frequency and voltage of $V_G$ and shuts down the unit 10 whenever the frequency and/or voltage of $V_G$ are outside their normally acceptable ranges. In Fig. 6 such protective circuitry is represented by Over and Under Frequency Sampling Circuit 70, Over and Under Voltage Sampling Circuit 71, OR gate 72 and Start and Stop Controller 73.

Monitoring Circuits 70 and 71 output a control signal whenever the frequency of voltage, respectively, of $V_G$ is unacceptable. The control signals are logically ORed by an OR gate 72, and the Controller 73 responds to the resulting output control signal from OR gate 72 by shutting down the unit 10 and disconnecting it from the power grid 13 by deactivating output contactor 74. Further protective devices may be provided, such as thermal switches, which may be used to shut down the unit 10 in response to unacceptably high temperatures in the cabinet housing the power conversion unit.

The Start and Stop Controller 73 may also be responsive to the input source 11 to restart the power conversion unit when certain source conditions are attained, e.g. the source voltage is within a predetermined voltage range.

The new and improved electrical power conversion system of the present invention is extremely reliable, efficient and easy to use and provides substantial improvements in operating performance over all known previous conversion systems. The conversion system provides a negative output resistance at the nominal frequency of the utility power grid and a positive output resistance at frequencies significantly different from the nominal frequency. Hence, the system of the present invention effectively provides power to the grid at the nominal frequency and absorbs useless power from the grid at other frequencies for conversion and return to the power grid at the desired nominal frequency.

Having described the invention in connection with a preferred embodiment thereof, it will be apparent that various modifications may be made. For example, those practicing the present invention may well desire to add additional elements such as electromagnetic interference input and output filters, or input storage capacitors.

**Claims**

1. An electrical power conversion system, including first means (24, 34, 35) for absorbing electrical power from a first electrical source (11) and converting said power to electrical power at the nominal operating frequency $f_o$ of a second electrical source (13); and characterized by second means (25, 34, 36) for absorbing electrical power from said second electrical source (13) at frequencies differing substantially from said nominal frequency $f_o$ of said second source, and for converting that additional power to electrical power at said nominal frequency $f_o$.

2. A system as set forth in Claim 1, wherein said first electrical source (11) is a d.c. source, and said second electrical source (13) is an a.c. source.

3. A system as set forth in Claim 2 wherein said first and second means comprise: bidirectional power flow control and conversion means (25) connected between said d.c. electrical source (11) and said a.c. electrical source (13); and circuit means (26, 34, 35, 36) electrically connected to said power flow control and conversion means for conditioning said control and conversion means to provide a negative output resistance to said a.c. source at the nominal operation frequency of said a.c. source and to provide a positive output resistance at frequencies substantially different from said nominal frequency.

4. A system as set forth in Claim 3 wherein said a.c. electrical source (13) is a conventional electric power grid having a nominal frequency of $f_o$, wherein said bidirectional means (25) includes a bidirectional switching mode amplifier having a power input ($V_{DC}$), a control input ($V_I$) and an output ($V_O$), means (28) coupling said power input ($V_{DC}$) of said amplifier (25) to the d.c. source (11), and means (12) coupling said output ($V_O$) of said amplifier to the power grid (13); and wherein said circuit means (26, 34, 35, 36) comprises a feedback network (34, 35, 36) having an input responsive to the grid (13) and an output applied to said control input of said amplifier, said feedback circuit including means for differentially adjusting the output impedance of said amplifier at the nominal frequency $f_o$ of said grid (13) compared with the output impedance of said amplifier at frequencies substantially different from said nominal frequency $f_o$.

5. A system as set forth in Claim 4, wherein said feedback network (34, 35, 36) includes three feedback paths, a first feedback path (34) generating an output voltage at the output of said amplifier in phase with the voltage on the grid, a second feedback path (35) generating an output voltage which leads the voltage on the grid (13) and a third feedback path (36) generating an output voltage which lags the voltage on the grid (13).

6. A system as set forth in Claim 5, wherein said first feedback path (34) is essentially frequency independent, said second feedback path (35) is primarily effective at said nominal frequency $f_o$ and has decreasing effectiveness at frequencies substantially different from $f_o$, and said third feedback path (36) has substantial effect only at frequencies substantially different from $f_o$.

7. A system as set forth in Claim 6, wherein said substantially different frequencies are those frequencies equal to or greater than twice the nominal frequency $f_o$.

8. A system as set forth in Claim 4, wherein said switching mode amplifier (25) includes a control logic circuit (64—67) responsive to the output ($V_I$) of said feedback network (26) and a plurality of electronic switches (51—54) controlled by said control logic circuit (64—67), said electronic switches (51—54) connecting the power input ($V_{DC}$) of said amplifier to the output ($V_O$) thereof.

9. A system as set forth in Claim 4 further including electrical means (70—73) responsive to the electric grid (13) for shutting down said power conversion system in response to any one of the following conditions: the amplitude of the grid voltage is higher than a first predetermined value; the amplitude of the grid voltage is lower than a second predetermined value; the frequency of the grid voltage is higher than a third predetermined value; or the frequency of the grid voltage is lower than a fourth predetermined value.

10. A method of electrical power conversion, characterized by the steps of: absorbing electrical power from an a.c. source at frequencies other than the nominal operating frequency of the source; and converting the absorbed electrical power to additional electrical power at the nominal frequency of the a.c. source.

**Patentansprüche**

1. System zum Umwandeln von elektrischer Energie, mit einer ersten Einrichtung (24, 34, 35) zur Entnahme von elektrischer Energie aus einer ersten elektrischen Stromquelle (11) und zum Umwandeln der genannten Energie in elektrische Energie mit der Nenn-Betriebsfrequenz $f_o$ einer zweiten elektrischen Stromquelle (13), gekennzeichnet durch eine zweite Einrichtung (25, 34, 36) zur Entnahme von elektrischer Energie aus der zweiten elektrischen Stromquelle (13) bei Frequenzen, die sich von der Nennfrequenz $f_o$ der zweiten Stromquelle beträchtlich unterscheiden, und zum Umwandeln der zusätzlichen Energie in elektrische Energie mit der Nennfrequenz $f_o$.

2. System nach Anspruch 1, dadurch gekennzeichnet, daß die erst elektrische Stromquelle (11) eine Gleichstromquelle und die zweite elektrische Stromquelle (13) eine Wechselstromquelle ist.

3. System nach Anspruch 2, dadurch gekennzeichnet, daß die erste und die zweite Einrichtung umfassen: eine zwischen der elektrischen Gleichstromquelle (11) und der elektrischen Wechselstromquelle (13) geschaltete, bidirektionale Einrichtung (25) zur Steuerung des Energieflusses und zur Energieumwandlung und eine mit der Einrichtung zur Steuerung des Energieflusses und zur Energieumwandlung verbundene Schaltungsanordnung (26, 34, 35, 36) zum Konditionieren der Steuerungs- und Umwandlungseinrichtung derart, daß sie bei der Nenn-Betriebsfrequenz der Wechselstromquelle für diese einen negativen Ausgangswiderstand darstellt und daß sie bei sich von der genannten Nennfrequenz beträchtlich unterscheidenden Frequenzen einen positiven Ausgangswiderstand darstellt.

4. System nach Anspruch 3, dadurch gekennzeichnet, daß die elektrische Wechselstromquelle (13) ein übliches elektrisches Starkstomnetz mit der Nennfrequenz $f_o$ ist, daß die bidirektionale Einrichtung (25) einen bidirektionalen Schaltverstärker besitzt, der einen Leistungseingang ($V_{DC}$), einen Steuereingang ($V_I$) und einen

7

Ausgang ($V_O$) bisitzt, ferner eine Einrichtung (28) zum Ankoppeln des Leistungseinganges ($V_{DC}$) des Verstärkers (25) an die Gleichstromquelle (11) und eine Einrichtung (12) zum Ankoppeln des Ausganges ($V_o$) des Verstärkers an das Starkstromnetz (13), wobei die genannte Schaltungsanordnung (26, 34, 35, 36) ein Rückkopplungsnetzwerk (34, 35, 36) umfaßt, das ein von dem Netz (13) abhängiges Eingangssignal empfängt und an den Steuereingang des Verstärkers ein Ausgangssignal anlegt und das eine Einrichtung besitzt, die bei Frequenzen, die sich von der Nennfrequenz $f_o$ des Netzes (13) beträchtlich unterscheiden eine variable andere Ausgangsimpedanz hat als bei der Nennfrequenz $f_o$ des Netzes (13).

5. System nach Anspruch 4, dadurch gekennzeichnet, daß das Rückkopplungsnetzwerk (34, 35, 36) drei Rückkopplungswege besitzt, und zwar einen ersten Rückkopplungsweg (34), der an den Ausgang des Verstärkers eine mit der Netzspannung gleichphasige Ausgangsspannung anlegt, einen zweiten Rückkopplungsweg (35), zum Erzeugen einer Spannung, die gegenüber der Spannung des Netzes (13) voreilt und einen dritten Rückkopplungsweg (36) zum Erzeugen einer Spannung, die gegenüber der Spannung des Netzes (13) nacheilt.

6. System nach Anspruch 5, dadurch gekennzeichnet, daß der erste Rückkopplungsweg (34) im wesentlichen frequenzunabhängig ist, daß der zweite Rückkopplungsweg (35) im wesentlichen bei der Nannfrequenz $f_o$ wirksam ist und bei Frequenzen, die sich von $f_o$ beträchtlich unterscheiden, eine geringere Wirksamkeit besitzt, und der dritte Rückkopplungsweg (36) im wesentlichen nur bei Frequenzen wirksam ist, die sich von $f_o$ beträchtlich unterscheiden.

7. System nach Anspruch 6, dadurch gekennzeichnet, daß die sich von der Netzfrequenz beträchtlich unterscheidenden Frequenzen mindestens doppelt so hoch sind wie die Nennfrequenz $f_o$.

8. System nach Anspruch 4, dadurch gekennzeichnet, daß der Schaltverstärker (25) eine Steuerlogikschaltung (64—67) besitzt, die auf das Ausgangssignal ($V_I$) des Rückkopplungsnetzwerkes (26) anspricht, sowie eine Mehrzahl von elektrischen Schaltern (51—54), die von der Steuerlogikschaltung (64—67) gesteuert werden und den Leistungseingang ($V_{DC}$) des Verstärkers an dessen Ausgang ($V_O$) verbinden.

9. System nach Anspruch 4, mit einer elektrischen Einrichtung (70—73), die in Abhängigkeit von dem Starkstromnetz (13) das Energieumwandlungssystem abschaltet, wenn einer der folgenden Zustände auftritt: Die Amplitude der Netzspannung ist höher als ein erster vorherbestimmter Wert; die Amplitude der Netzspannung ist niedriger als ein zweiter vorherbestimmter Wert; die Frequenz der Netzspannung ist höher als ein dritter vorherbestimmter Wert; oder die Frequenz der Netzspannung ist niedriger also ein vierter vorherbestimmter Wert.

10. Verfahren zum Umwandeln von elektrischer Energie, dadurch gekennzeichnet, daß einer Wechselstromquelle elektrische Energie mit Frequenzen entnommen wird, die sich von der Nenn-Betriebsfrequenz der Stromquelle unterscheiden, und daß entnommene elektrische Energie in zusätzliche elektrische Energie mit der Nennfrequenz der Wechselstromquelle umgewandelt wird.

**Revendications**

1. Système de conversion d'énergie électrique comprenant un premier dispositif (24, 34, 35) pour absorber de l'énergie électrique d'une première source électrique (11) et la convertir en énergie électrique à la fréquence nominale $f_o$ d'une seconde source électrique (13), caractérisé par un second dispositif (25, 34, 36) pour absorber de l'énergie électrique de la seconde source (13) à des fréquences qui diffèrent nettement de la fréquence nominale $f_o$ de la seconde source et pour convertir cette énergie additionnelle en énergie électrique à cette fréquence nominale $f_o$.

2. Système selon la revendication 1, dans lequel la première source électrique (11) est une source de courant continu et la seconde source électrique (13) est une source de courant alternatif.

3. Système selon la revendication 2, dans lequel le premier et le second dispositif comprennent un dispositif bidirectif (25) de commande de circulation et de conversion d'énergie, qui est connecté entre la source de courant continu (11) et la source decourant alternatif (13), ainsi que des moyens de circuiterie (26, 34, 35, 36) connectés électriquement au dispositif de commande de circulation et de conversion d'énergie pour conditionner ce dispositif de commande et de conversion, de manière à conférer une résistance de sortie négative à la source de courant alternatif à la fréquence nominale de cette source de courant alternatif et à lui conférer une résistance de sortie positive à des fréquences qui diffèrent nettement de cette fréquence nominale.

4. Système selon la revendication 3, dans lequel la source de courant alternatif (13) est un réseau classique de transport d'énergie électrique, ayant une fréquence nominale $f_o$, dans lequel le dispositif bidirectif (25) comporte un amplificateur à mode de commutation bidirective, présentant une entrée de puissance ($V_{DC}$), une entrée de commande ($V_I$) et une sortie ($V_O$), un dispositif (28) pour coupler l'entrée de puissance ($V_{DC}$) de cet amplificateur (25) à la source de courant continu (11), de même qu'un dispositif (12) pour coupler la sortie ($V_O$) de cet amplificateur au réseau de transport d'énergie (13), et dans lequel lesdits moyens de circuiterie (26, 34, 35, 36) comprennent un réseau de rétroaction (34, 35, 36) avec une entrée sensible au réseau de transport d'énergie (13) et avec une sortie reliée à l'entrée de commande dudit amplificateur, le circuit de rétroaction comprenant des moyens pour ajuster l'impédance de sortie de l'amplificateur différemment à la fréquence nominale $f_o$ du réseau de

transport (13) qu'à des fréquences qui diffèrent nettement de ladite fréquence nominale $f_o$.

5. Système selon la revendication 4, dans lequel le réseau de rétroaction (34, 35, 36) comporte trois trajets de réaction, un premier trajet de réaction (34) produisant à la sortie de l'amplificateur une tension de sortie en phase avec la tension du réseau de transport, un second trajet de réaction (35) produisant une tension de sortie qui est en avance par rapport à la tension sur le réseau de transport (13) et un troisième trajet de réaction (36) produisant une tension de sortie qui est en retard par rapport à la tension sur le réseau de transport (13).

6. Système selon la revendication 5, dans lequel le premier trajet de réaction (34) est essentiellement indépendant de la fréquence, le second trajet de réaction (35) est effectif en premier lieu à fréquence nominale $f_o$ et possède un effet décroissant à des fréquences qui diffèrent nettement de $f_o$ et le troisième trajet de réaction (36) a un effet notable seulement à des fréquences qui diffèrent nettement de $f_o$.

7. Système selon la revendication 6, dans lequel les fréquences qui diffèrent nettement de la fréquence nominale $f_o$ sont des fréquences égales ou supérieures à deux fois la fréquence nominale $f_o$.

8. Système selon la revendication 4, dans lequel l'amplificateur à mode de commutation (25) comporte un circuit logique de commande (64—67) sensible à la sortie ($V_I$) du réseau de rétroaction (26) et plusieurs commutateurs électroniques (51—54) commandés par le circuit logique de commande (64—67), les commutateurs électroniques (51—54) reliant l'entrée de puissance ($V_{DC}$) dudit amplificateur à sa sortie ($V_o$).

9. Système selon la revendication 4, comprenant en outre des moyens électriques (70—73) sensibles au réseau de transport d'énergie électrique (13) pour arrêter le système de conversion d'énergie en réponse à l'une quelconque des conditions suivantes: l'amplitude de la tension de réseau est supérieure à une première valeur prédéterminée; l'amplitude de la tension de réseau est inférieure à une seconde valeur prédéterminée; la fréquence de la tension de réseau est supérieure à une troisième valeur prédéterminée; ou la fréquence de la tension de réseau est inférieure à une quatrième valeur prédéterminée.

10. Procédé de conversion d'énergie électrique, caractérisé en ce qu'il comprend: l'absorption d'énergie électrique d'une source de courant alternatif à des fréquences autres que la fréquence nominale de la source et la conversion de l'énergie électrique absorbée en énergie électrique additionnelle à la fréquence nominale de la source de courant alternatif.

**Fig. 1**

**Fig. 2a**

$f \cong f_o$

**Fig. 2b**

0 085 249

$$\frac{V_1}{V_G'} = K_1 \qquad 34'$$

*Fig. 5*

$$\frac{V_2}{V_G'} = \frac{-K_2}{1+2\gamma\frac{s}{w_0}+\frac{s^2}{w_0{}^2}} \qquad 35'$$

$$\frac{V_3}{V_G'} = \frac{-K_3\,T_1\,s}{1+T_1\,s} \qquad 36'$$

38'  Σ  → $V_I$

55'  ATT. A

$V_C$

$V_G'$

*Fig. 3*

POWER GRID—13

19

22

21

14

17

ARRAY ~11~

15

15

POWER CONVERSION UNIT —10

16

16

Fig. 4

Fig. 6